# EUROPÄISCHE PATENTSCHRIFT

(11) **EP 0 647 254 B1**
(45) Veröffentlichungstag und Bekanntmachung des Hinweises auf die Patenterteilung: **13.11.1996**
(21) Anmeldenummer: 93912983.9
(22) Anmeldetag: 16.06.1993
(51) Int. Cl.: C09B 67/22

(54) **FARBSTOFFMISCHUNGEN, ENTHALTEND PYRIDONAZOFARBSTOFFE**
DYE MIXTURES CONTAINING PYRIDONAZO DYES
MELANGES DE COLORANTS CONTENANT DES COLORANTS PYRIDONAZO

(30) Priorität: 26.06.1992 DE 4221008
(43) Veröffentlichungstag der Anmeldung: 12.04.1995
(73) Patentinhaber: BASF Aktiengesellschaft, 67063 Ludwigshafen (DE)
(72) Erfinder: LANGE, Arno, D-6702 Bad Duerkheim (DE); DEGEN, Helmut, D-6710 Frankenthal (DE); LAMM, Gunther, D-6733 Hassloch (DE); REICHELT, Helmut, D-6730 Neustadt (DE); WEGERLE, Dieter, D-6800 Mannheim 1 (DE)
(86) Internationale Anmeldenummer: EP9301516
(87) Internationale Veröffentlichungsnummer: WO9400518

(56) Entgegenhaltungen:
- EP-A- 0 038 439
- EP-A- 0 083 313
- EP-A- 0 128 564
- EP-A- 0 314 002
- EP-A- 0 441 166
- US-A- 3 954 396

## Beschreibung

Die vorliegende Erfindung betrifft neue Farbstoffmischungen, enthaltend 40 bis 75 Gew.-%, bezogen auf das Gewicht der Farbstoffe, eines Farbstoffs der Formel I 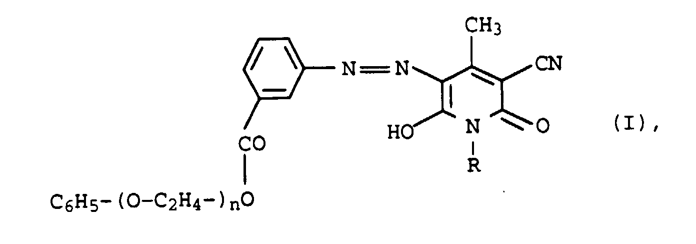 in der n 1 und R C₁-C₄-Alkyl bedeuten, sowie 25 bis 60 Gew.-%, bezogen auf das Gewicht der Farbstoffe, eines Farbstoffs der Formel I, in der n 2 und R C₁-C₄-Alkyl bedeuten, Farbstoffzubereitungen, enthaltend die neuen Farbstoffmischungen, sowie die Verwendung der Farbstoffmischungen zum Färben oder Bedrucken von textilen Fasern oder Geweben.

Aus der EP-A-314 002 sind sowohl die Einzelkomponenten der obengenannten Farbstoffmischung als auch Farbstoffmischungen bekannt. Die dort genannten Produkte sind in anwendungstechnischner Hinsicht jedoch noch nicht voll befriedigend.

Aufgabe der vorliegenden Erfindung war es, Farbstoffe bereitzustellen, über ein vorteilhaftes anwendungstechnisches Eigenschaftsprofil verfügen und die leicht zugänglich sind.

Demgemäß wurden die eingangs näher bezeichneten Farbstoffmischungen gefunden.

R in Formel I ist z.B. Methyl, Ethyl, Propyl, Isopropyl, Butyl, Isobutyl oder sec-Butyl.

Bevorzugt sind Farbstoffmischungen, enthaltend Farbstoffe der Formel I, in der R Methyl oder Ethyl, insbesondere Methyl bedeutet.

Neben den Farbstoffen der Formel I, in der n 1 oder 2 bedeutet, können die neuen Farbstoffmischungen noch in untergeordneten Mengen (bis zu 10 Gew.-%, vorzugsweise bis zu 4 Gew.-%, jeweils bezogen auf das Gewicht der Farbstoffe mit n 1 und 2) solche Farbstoffe der Formel I enthalten, in der n 3, 4 oder 5 bedeutet.

Die neuen Farbstoffmischungen können auf an sich bekannte Weise erhalten werden. Beispielsweise kann man ein Amingemisch, enthaltend 35 bis 90 Gew.-%, bezogen auf das Gewicht der Amine, eines Amins der Formel II 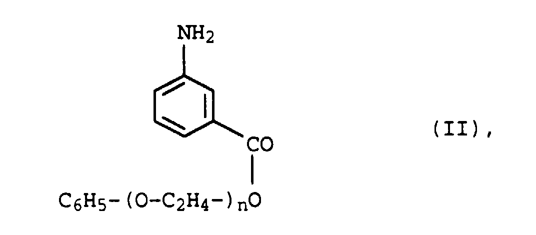 in der n 1 bedeutet, 10 bis 65 Gew.-%, bezogen auf das Gewicht der Amine, eines Amins der Formel II, in der n 2 bedeutet, und gegebenenfalls bis zu 10 Gew.-%, bezogen auf das Gewicht der Amine mit n 1 und 2, eines oder mehrerer Amine der Formel I, in der n 3, 4 oder 5 bedeutet, diazotieren und mit einem Pyridon der Formel III 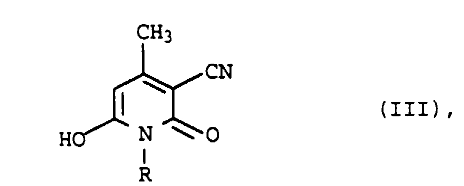 in der R die obengenannte Bedeutung besitzt, kuppeln. Nach beendeter Kupplung schließt sich in der Regel noch eine Temperung des Reaktionsgemisches bei einer Temperatur von 60 bis 90°C an.

Gegebenenfalls können den neuen Mischungen weitere Komponenten, z.B. Dispergiermittel, wie Ligninsulfonate oder Sulfonierungsprodukte des Reaktionsprodukts von Formaldehyd mit Aromaten, oder andere Hilfsstoffe, zugesetzt werden.

Demgemäß betrifft die vorliegende Erfindung weiterhin Farbstoffzubereitungen, enthaltend 15 bis 60 Gew.-%, bezogen auf das Gewicht der Farbstoffzubereitung, einer eingangs näher bezeichneten Farbstoffmischung sowie 40 bis 85 Gew.-%, bezogen auf das Gewicht der Farbstoffpräparation, Dispergiermittel.

Die neuen Farbstoffmischungen eignen sich in vorteilhafter Weise zum Färben oder Bedrucken von textilen Fasern oder Geweben, insbesondere von Polyestern, daneben auch von Fasern oder Geweben aus Celluloseestern oder Polyamiden oder Mischgeweben aus Polyester und Cellulosefasern.

Ihre färberischen Eigenschaften sind deutlich besser als die der Einzelfarbstoffe. Insbesondere sind sie besser mit Blau- und Rotfarbstoffen kombinierbar.

Die folgenden Beispiele sollen die Erfindung näher erläutern.

### Beispiel 1

301 g des Amins der Formel 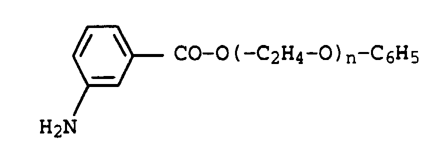 (mit n = 2) und 660,5 g des Amins der obigen Formel (mit n = 1) wurden in 380 ml Eisessig gelöst. Dazu gab man 1100 ml konz. Salzsäure und 295 g konz. Schwefelsäure. Dann kühlte man mit 4,5 kg Eis ab. Bei 0 bis 5°C wurde das Gemisch mit 1140 ml 23 gew.-%iger wäßriger Natriumnitritlösung versetzt und 90 Minuten bei 0 bis 5°c nachgerührt. Dann zerstörte man überschüssige salpetrige Säure mit Amidosulfonsäure und ließ das Reaktionsgemisch innerhalb von 45 Minuten zu einer Lösung von 586 g 1,4-Dimethyl-2-hydroxy-5-cyanopyrid-6-on in 7 Liter Wasser und 290 g Natronlauge (50 gew.-%ig), die mit Eis auf 0°C abgekühlt wurde, laufen. Während des Zulaufs wurde der pH-Wert des resultierenden Reaktionsgemisches durch Zugabe eiskalter 20 gew.-%iger Natronlauge im Bereich von 4 bis 8 gehalten. Die Temperatur des Reaktionsgemisches hielt man mit Eis bei ≤ 15°C. Nach beendetem Zulauf stellte man den pH-Wert der Farbstoffsuspension auf 7,4 bis 7,8. Man rührte die Suspension 1 bis 3 Stunden bei diesem pH-Wert nach und erhitzte dann auf 80°C und temperte das Gemisch 30 bis 60 Minuten bei dieser Temperatur. Der grobkristalline Farbstoff wurde abgesaugt und mit Wasser neutral und salzfrei gewaschen. Man erhielt 1540 g eines Farbstoffgemisches, das bei 128°C schmilzt und das sich aus 1 mol des Farbstoffs der Formel 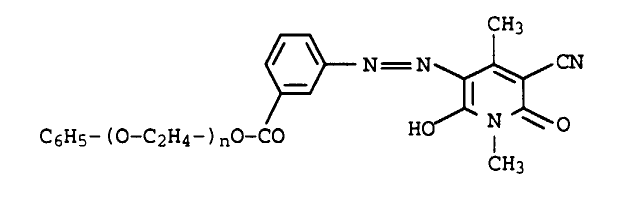 (mit n = 2) und 2,57 mol des Farbstoffs der obigen Formel (mit n = 1) zusammensetzt.

Diese Farbstoffmischung färbt, insbesondere in Mischungen mit Blau- und Rotfarbstoffen, Polyestergewebe bei einer Färbetemperatur von 120 bis 130°C gleichmäßig an, wobei die einzelnen Farbstoffe gleiche Aufziehgeschwindigkeiten haben.

### Beispiel 2

Ein Gemisch aus 126,5 g des Amins der Formel 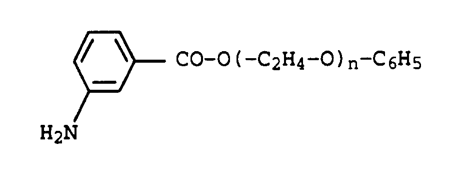 (mit n = 2) und 294 g des Amins der obigen Formel (mit n = 1) wurde aufgeschmolzen und bei ca. 80°C in 980 ml kalte ca. 25 gew.-%ige Salzsäure eingerührt. Dazu gab man 1 g eines sauer wirksamen Netzmittels und rührte das Gemisch 1 Stunde nach, dann war das Aminhydrochlorid als Niederschlag ausgefallen. Dann kühlte man mit Eis auf 0°C ab und gab innerhalb von 10 Minuten 501 ml 23 gew.-%ige wäßrige Natriumnitritlösung bei maximal 6°C hinzu. Die entstehende Diazoniumsalzlösung wurde 1,5 Stunden bei 0 bis 5°C nachgerührt. Dann zerstörte man überschüssige salpetrige Säure und ließ die Diazoniumsalzlösung zu einer Lösung von 256,5 g 1,4-Dimethyl-2-hydroxy-5-cyanopyrid-6-on in 5 Liter Wasser, die eine Temperatur von 0°C aufwies, laufen. Dabei wurde das Reaktionsgemisch mit verdünnter Natronlauge versetzt, so daß der pH-Wert des Reaktionsgemisches im Bereich von 4,0 bis 7,5 lag. Die Kupplung war wenige Minuten nach Zulauf des Diazoniumsalzes beendet. Man erhitzte die Suspension bei einem pH-Wert von 7 bis 7,8 auf 80 bis 85°C auf, temperte 45 Minuten und isolierte den ausgefallenen Farbstoff durch Absaugen. Nach Waschen mit Wasser und Trocknen erhielt man 692 g eines gelben Pulvers, das bei 128°C schmilzt.

Das Farbstoffpulver besteht zu 30 Gew.-% aus dem Farbstoff der Formel 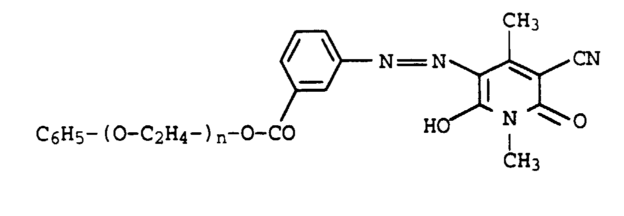 (mit n = 2) und zu 70 Gew.-% aus dem Farbstoff der obigen Formel (mit n = 1).

## Patentansprüche

1. Farbstoffmischungen, enthaltend 40 bis 75 Gew.-%, bezogen auf das Gewicht der Farbstoffe, eines Farbstoffs der Formel I 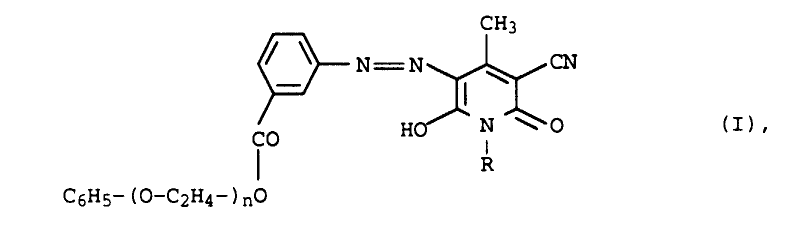 in der n 1 und R C₁-C₄-Alkyl bedeuten, sowie 25 bis 60 Gew.-%, bezogen auf das Gewicht der Farbstoffe, eines Farbstoffs der Formel I, in der n 2 und R C₁-C₄-Alkyl bedeuten.

2. Farbstoffmischungen nach Anspruch 1, dadurch gekennzeichnet, daß R Methyl oder Ethyl bedeutet.

3. Farbstoffzubereitungen, enthaltend 15 bis 60 Gew.-%, bezogen auf das Gewicht der Farbstoffzubereitung, einer Farbstoffmischung gemaß Anspruch 1 sowie 40 bis 85 Gew.-%, bezogen auf das Gewicht der Farbstoffzubereitung, Dispergiermittel.

4. Verwendung der Farbstoffmischungen gemaß Anspruch 1 zum Färben oder Bedrucken von textilen Fasern oder Geweben.

## Claims

1. Dye mixtures comprising from 40 to 75 % by weight, based on the weight of the dyes, of a dye of the formula I 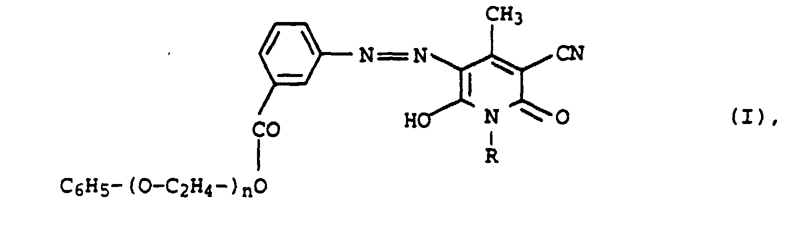 where R is C₁-C₄-alkyl and n is 1, and from 25 to 60 % by weight, based on the weight of the dyes, of a dye of the formula I where R is C₁-C₄-alkyl and n is 2.

2. Dye mixtures as claimed in claim 1 wherein R is methyl or ethyl.

3. Dye preparations comprising from 15 to 60 % by weight, based on the weight of the dye preparation, of a dye mixture as claimed in claim 1 and from 40 to 85 % by weight, based on the weight of the dye preparation, of a dispersant.

4. The use of the dye mixtures of claim 1 for dyeing or printing textile fibers or fabrics.

## Revendications

1. Mélanges de colorants, contenant 40 à 75% en poids, par rapport au poids des colorants, d'un colorant de formule I 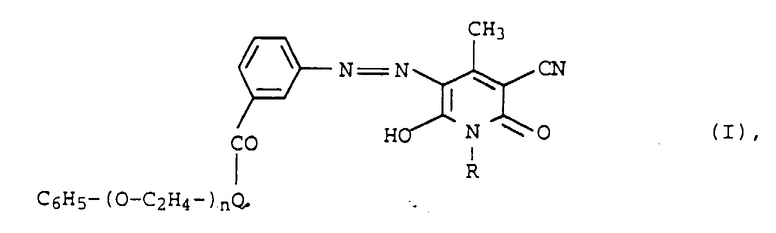 dans laquelle n est mis pour 1 et R représente un reste alkyle en C₁-C₄, ainsi que 25 à 60% en poids, par rapport au poids des colorants, d'un colorant de formule I dans laquelle n est mis pour 2 et R représente un reste alkyle en C₁-C₄.

2. Mélanges de colorants selon la revendication 1, caractérisés en ce que R représente un reste méthyle ou éthyle.

3. Préparations de colorants, contenant 15 à 60% en poids, par rapport au poids de la préparation de colorants, d'un mélange de colorants selon la revendication 1, ainsi que 40 à 85% en poids, par rapport au poids de la préparation de colorants, d'un agent dispersant.

4. Utilisation des mélanges de colorants selon la revendication 1 pour la teinture ou l'impression de fibres textiles ou de tissus.
